# EUROPÄISCHE PATENTANMELDUNG

(11) **EP 4 485 145 A1**
(43) Veröffentlichungstag der Anmeldung: **01.01.2025**
(21) Anmeldenummer: 24181072.0
(22) Anmeldetag: 10.06.2024
(51) Int. Cl.: G06F 3/01

(54) **TAKTILES BERÜHRUNGSFELD**

(30) Priorität: 28.06.2023 DE 102023206105
(71) Anmelder: Benecke-Kaliko AG, 30419 Hannover (DE)
(72) Erfinder: Wolff, Matthias, 30175 Hannover (DE)
(74) Vertreter: Continental Corporation

(57) **Zusammenfassung**

Die Erfindung betrifft ein taktiles Berührungsfeld (1) mit einer Vielzahl von in einem Raster angeordneten taktilen Zellen (10), wobei jede Zelle eine von ihrer Berührungsseite (11) zu ihrer Rückseite (12) gerichtete Tiefenrichtung (T) definiert. Es wird vorgeschlagen, jede Zelle (10) dazu auszubilden, zwischen einem ersten Zustand und einem zweiten Zustand schaltbar zu sein, wobei sich der mechanische Widerstand, den die Zelle (10) gegen eine in Tiefenrichtung (T) wirkende Kraft (K) aufbringen kann, zwischen den beiden Zuständen unterscheidet.

## Beschreibung

Die vorliegende Erfindung betrifft ein taktiles Berührungsfeld mit einer Vielzahl von in einem Raster angeordneten taktilen Zellen mit den Merkmalen des Anspruchs 1, ein mit einem solchen Berührungsfeld ausgestattetes Auskleidungsmaterial mit den Merkmalen des Anspruchs 13 und dessen Verwendung gemäß Anspruch 14.

Derartige Berührungsfelder dienen beispielsweise der dynamischen Wiedergabe von Informationen in einem berührungssensorischen Format. Dabei wird durch Ansteuern der taktilen Zellen die Oberfläche des Rasters in einer durch eine Berührung eines Benutzers wahrnehmbare Weise strukturiert. Auf diese Weise kann beispielsweise eine Blindenschrift dargestellt werden.

Aus dem Stand der Technik sind Berührungsfelder bekannt, bei denen die taktilen Zellen ausfahrbare Stifte aufweisen, die aus der Oberfläche des Rasters ausfahrbar sind. Ein Beispiel für ein solches Berührungsfeld ist in der US 2022/051 590 A1 offenbart. Nachteilig an solchen Berührungsfeldern ist, dass sie aufgrund der vielen mechanischen Teile aufwendig in der Herstellung sind und relativ viel Bauraum benötigen. Durch das starre Gehäuse, in dem die Stifte und eine diese bewegende Mechanik angeordnet sind, erschwert zudem eine Konstruktion des Berührungsfeldes mit einer gekrümmten Oberfläche.

Aufgabe der vorliegenden Erfindung ist es daher, ein taktiles Berührungsfeld der eingangs genannten Art bereitzustellen, welches die Nachteile des Standes der Technik zumindest teilweise abmildert, vorzugsweise überwindet. Zumindest soll eine Alternative zu bisherigen Konstruktionen geschaffen werden.

Diese Aufgabe wird durch ein taktiles Berührungsfeld mit den Merkmalen des Anspruchs 1 gelöst. Bevorzugte Merkmale sind Gegenstand der abhängigen Ansprüche. Weitere Vorteile und Merkmale sind der allgemeinen Beschreibung sowie den Ausführungsbeispielen zu entnehmen. Gegenstand der vorliegenden Erfindung ist gemäß Anspruch 13 auch ein flächiges Auskleidungsmaterial mit einem solchen taktilen Berührungsfeld sowie gemäß Anspruch 14 dessen Verwendung in Flugzeugen, Kraftfahrzeugen und/oder Wasserfahrzeugen, für Innen- und/oder Außenverkleidungen.

Das erfindungsgemäße taktile Berührungsfeld weist eine Vielzahl von in einem insbesondere ein- oder zweidimensionalen Raster angeordnete taktilen Zellen auf. Jede Zelle weist eine Berührungsseite sowie eine von der Berührungsseite abgewandte Rückseite auf und definiert eine von der Berührungsseite zur Rückseite gerichtete Tiefenrichtung. Die Tiefenrichtung einer Zelle verläuft hierbei bevorzugt senkrecht zu einer äußeren Berührungsoberfläche des Berührungsfeldes. Jede Zelle ist dazu ausgebildet, zwischen einem ersten Zustand, in dem die Zelle einen ersten mechanischen Widerstand gegen eine in Tiefenrichtung wirkende Kraft aufbringen kann, und einem zweiten Zustand, in dem die Zelle einen zweiten mechanischen Widerstand gegen die in Tiefenrichtung wirkende Kraft aufbringen kann, schaltbar zu sein, wobei der zweite mechanische Widerstand kleiner ist als der erste mechanische Widerstand.

Der Erfindung liegt die Idee zugrunde, zunächst lediglich den mechanischen Widerstand der Zellen zu beeinflussen, was nicht unbedingt auch automatisch mit einer Bewegung der Zellen bzw. Positionsänderung in Tiefenrichtung verbunden ist. Eine solche Positionsänderung der Zellen in Tiefenrichtung kann jedenfalls bei einer auf die Zellen in Tiefenrichtung aufgebrachter Kraft erfolgen. Eine solche Kraft kann beispielsweise eine von einem Benutzer etwa mit einem Finger auf das Berührungsfeld aufgebrachte Berührungskraft sein. Ferner kann eine solche Kraft auch dadurch aufgebracht werden, indem die Rückseiten der Zellen mit einem Unterdruck beaufschlagt werden. Entlang der Tiefenrichtung unterschiedlich positionierte Zellen sind dann als lokale Vertiefungen und/oder Erhöhungen der Berührungsoberfläche des Berührungsfeldes taktil wahrnehmbar.

Bevorzugt ist jede Zelle dazu ausgebildet, bei in Tiefenrichtung auf die Zelle aufgebrachter Kraft in dem ersten Zustand der Zelle eine erste Wegstrecke in Tiefenrichtung bewegbar zu sein, und in dem zweiten Zustand der Zelle eine zweite Wegstrecke in Tiefenrichtung bewegbar zu sein, wobei die zweite Wegstrecke kleiner ist als die erste Wegstrecke. Der erste mechanische Widerstand und der zweite mechanische Widerstand sind dabei so dimensioniert, dass bei Zellen, die sich in unterschiedlichen Zuständen befinden, eine auf diese Zellen in Tiefenrichtung wirkende, gleich große Kraft zu einer unterschiedlichen Position der Zellen in Tiefenrichtung resultiert.

In einer bevorzugten Ausgestaltung des taktilen Berührungsfelds weist jede Zelle einen festen Körper und einen rückseitig davon angeordneten Körpersitz zum Abstützen des Körpers auf, wobei der Körper eine erste Seite und eine davon abgewandte, insbesondere gegenüberliegende, zweite Seite aufweist und derart bewegbar gelagert ist, dass der Körper in dem ersten Zustand der Zelle mit seiner ersten Seite dem Körpersitz zugewandt ist und in dem zweiten Zustand der Zelle mit seiner zweiten Seite dem Körpersitz zugewandt ist. Der mechanische Widerstand kann somit in einfacher Weise durch zwei mechanische Bauteile (den Körper und den Körpersitz) und in Abhängigkeit von der dem Körpersitz zugewandten Seite des Körpers eingestellt werden. Insbesondere weist das Berührungsfeld entsprechende Mittel zum Bewegen des Körpers zwischen dem ersten Zustand der Zelle und dem zweiten Zustand der Zelle auf.

Bevorzugt sind der Körper und der Körpersitz derart ausgebildet, dass bei in Tiefenrichtung auf die Zelle aufgebrachter Kraft der Körper in dem ersten Zustand der Zelle eine erste Wegstrecke auf den Körpersitz zu bewegt werden kann und in dem zweiten Zustand der Zelle eine zweite Wegstrecke auf den Körpersitz zu bewegt werden kann, wobei die zweite Wegstrecke kleiner ist als die erste Wegstrecke. Dies ermöglicht eine besonders einfache mechanische Umsetzung des variablen mechanischen Widerstands der Zellen.

Insbesondere sind der Körper und der Körpersitz derart ausgebildet, dass der Körper in dem ersten und/oder in dem zweiten Zustand der Zelle zumindest teilweise in den Körpersitz eingeführt werden kann. Insbesondere bildet der Körpersitz eine zentrale Ausbuchtung bzw. Öffnung aus, in die der Körper zumindest teilweise eingeführt werden kann. Bevorzugt weist der Körper eine von seiner ersten Seite zu seiner zweiten Seite zulaufende Querschnittsfläche auf. Der Körper kann insbesondere bezüglich seiner Querschnittsfläche dabei beispielsweise so dimensioniert sein, dass der Körper mit der ersten Seite nicht in die Ausbuchtung bzw. Öffnung des Körpersitzes eingeführt werden kann und der Körper mit der zweiten Seite zumindest teilweise in die Ausbuchtung bzw. Öffnung eingeführt werden kann. Alternativ kann der Körper insbesondere bezüglich seiner Querschnittsfläche beispielsweise so dimensioniert sein, dass der Körper mit der ersten Seite eine geringere Wegstrecke in die Ausbuchtung bzw. Öffnung des Körpersitzes eingeführt werden als mit der zweiten Seite.

In einer weiteren bevorzugten Ausgestaltung des erfindungsgemäßen Berührungsfelds weist jede Zelle eine insbesondere kugelförmige, fluidgefüllte Kapsel mit flexibler Membran auf, in der der Körper eingeschlossen ist. Dies ermöglicht eine drehbare Lagerung des Körpers mit ausreihender Robustheit und Flexibilität. Insbesondere ist die Kapsel auf dem Körpersitz abgestützt bzw. gelagert. Das Fluid ist bevorzugt eine Flüssigkeit, insbesondere ein Öl, da damit ausreichend Auftrieb für den Körper bereitgestellt werden kann.

In einer weiteren bevorzugten Ausgestaltung des erfindungsgemäßen Berührungsfelds weist der Körper einen elektrischen und/oder magnetischen Dipol auf. Auf diese Weise kann der Körper in einfacher Weise und berührungslos durch Anlegen eines entsprechenden elektrischen und/oder magnetischen Feldes ausgerichtet werden, was eine einfach zu implementierende Möglichkeit der Schaltung zwischen den Zuständen der Zellen ermöglicht. Bevorzugt erstreckt sich die Dipolachse des Dipols von der ersten Seite des Körpers zur zweiten Seite des Körpers erstreckt. Insbesondere ist der Körper spiegel- und/oder rotationssymmetrisch um die Dipolachse ausgebildet ist. Ein Körper mit magnetischem Dipol kann beispielsweise mittels Spritzgussverfahren aus einem Kunststoffgranulat mit darin enthaltenen magnetisierbaren Partikeln sowie anschließender Magnetisierung hergestellt werden. Zur Herstellung eines Körpers mit elektrischem Dipol kann beispielsweise ein Dipolmaterial, wie z.B. Silbernitrat, unter einem elektrischen Feld in einem Kunstharz eingebettet werden. Vorzugsweise ist das taktile Berührungsfeld mit Mitteln zur Erzeugung eines elektrischen und/oder magnetischen Feldes zum Schalten zwischen den Zuständen der Zelle durch Ausrichtung des Dipols des Körpers ausgestattet. Das Erzeugen eines elektrischen Feldes für eine Zelle kann beispielsweise durch zwei Elektroden erfolgen, zwischen denen die Zelle angeordnet ist. Bevorzugt ist dabei eine erste Elektrode auf oder an der Berührungsseite der Zelle und eine zweite Elektrode auf oder an der Rückseite der Zelle angeordnet. Auf diese Weise lässt sich für jede Zelle ein relativ ungestörtes elektrisches Feld in Tiefenrichtung bereitstellen. Ferner wird der Bauraum zwischen den Zellen nicht beeinträchtigt. Das Erzeugen eines magnetischen Feldes lässt sich beispielsweise durch einen oder mehrere Elektromagneten erzeugen, die in der Nähe der Zelle angeordnet sind.

In einer weiteren bevorzugten Ausgestaltung des erfindungsgemäßen Berührungsfelds weist das Berührungsfeld eine die Zellen auf ihrer Berührungsseite abdeckende flexible Schutzmembran auf. Auf diese Weise werden die Zellen sowie ggf. weitere Bauteile, wie Elektroden, vor äußeren Einflüssen geschützt.

In einer weiteren bevorzugten Ausgestaltung des erfindungsgemäßen Berührungsfelds weist das Berührungsfeld Mittel zur Erzeugung einer in Tiefenrichtung gerichteten Zugkraft auf die Zellen auf. Auf diese Weise kann eine strukturierte Bedienoberfläche bereitgestellt werden, da Zellen, die in unterschiedlichen Zuständen unterschiedliche mechanische Widerstände aufbringen, durch die Zugkraft in unterschiedliche Positionen verlagert werden. Bevorzugt enthalten die Mittel zur Erzeugung einer Zugkraft auf die Zellen Mittel zur Erzeugung eines Unterdrucks aufseiten der Rückseiten der Zellen. Auf diese Weise kann mit geringem Aufwand eine Zugkraft auf sämtliche Zellen aufgebracht werden. Beispielsweise können die Mittel zur Erzeugung eines Unterdrucks eine Pumpe enthalten.

In einer weiteren bevorzugten Ausgestaltung des erfindungsgemäßen Berührungsfelds sind die Zellen in einer elastischen Matrix eingeschlossen. Auf diese Weise kann das Berührungsfeld flexibel geformt und in einfacher Weise an ebenen oder gekrümmten Oberflächen appliziert werden.

Gemäß dem bereits vor- sowie dem weiter unten nachbeschriebenen wird die eingangs gestellte Aufgabe auch durch ein flächiges oder streifenförmiges Auskleidungsmaterial mit den Merkmalen des Anspruchs 13 gelöst. Das erfindungsgemäße Auskleidungsmaterial weist ein erfindungsgemäßes taktiles Berührungsfeld auf. Das Auskleidungsmaterial kann insbesondere in Flugzeugen, Kraftfahrzeugen oder Wasserfahrzeugen, für Innenverkleidungen oder -verkleidungsteile, insbesondere Schalttafeln oder Armaturenbretter, Seitenverkleidungen, Türverkleidungen, Ablagen, und/oder Außenverkleidungen verwendet werden. Das in diesen Oberflächen integrierte Berührungsfeld kann beispielsweise zur dynamischen Wiedergabe von Informationen (z.B. Warnsignalen) in einem berührungssensorischen Format oder zur Erzeugung besonderer taktiler, beispielsweise als angenehm empfundener Effekte dienen. Ferner kann das Berührungsfeld auch zur Indikation der Position von nicht sichtbaren Berührungselementen wie Knöpfen, Tasten oder Ähnlichem dienen.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand der unabhängigen Ansprüche kombinierbar sind.

Abwandlungen und Ausgestaltungen der Erfindung sowie weitere Vorteile und Einzelheiten der Erfindung lassen sich der nachfolgenden gegenständlichen Beschreibung und den Zeichnungen entnehmen. In den schematischen Figuren zeigen:
- Fig. 1: eine erste Ausführungsform eines erfindungsgemäßen taktilen Berührungsfeldes in einer Schnittansicht;
- Fig. 2: das taktile Berührungsfeld aus Fig. 1 mit geändertem Zustand der mittleren Zelle;
- Fig. 3: das taktile Berührungsfeld aus Fig. 2 mit einer von der Berührungsseite auf die Zellen wirkenden Kraft;

Gleich oder ähnlich wirkende Teile sind - sofern dienlich - mit identischen Bezugsziffern versehen.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden.

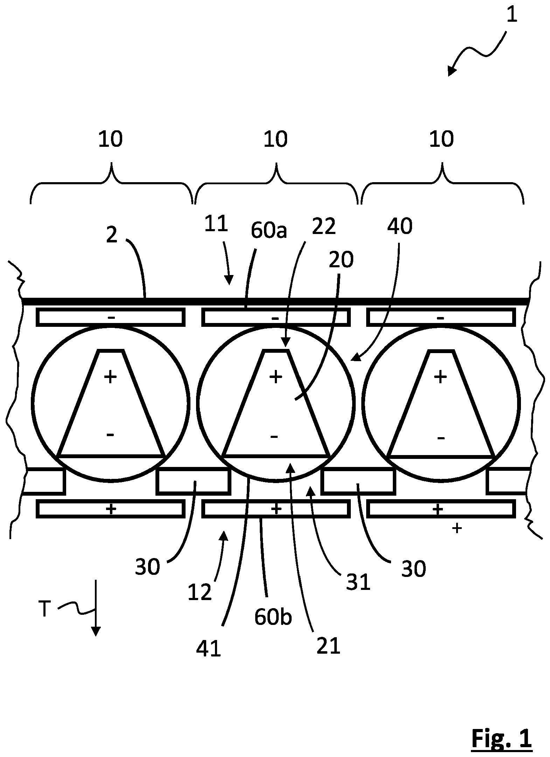

Die Figuren 1 bis 3 zeigen eine erste Ausführungsform eines taktilen Berührungsfeldes 1 mit einer Vielzahl von in einem Raster angeordneten taktilen Zellen 10 (beispielhaft sind drei Zellen 10 dargestellt). Jede Zelle 10 weist eine Berührungsseite 11 sowie eine von der Berührungsseite 11 abgewandte Rückseite 12 auf und definiert eine von der Berührungsseite 11 zur Rückseite 12 gerichtete Tiefenrichtung T. Jede Zelle 10 ist dazu ausgebildet ist, zwischen einem ersten Zustand, in dem die Zelle 10 einen ersten mechanischen Widerstand gegen eine in Tiefenrichtung T wirkende Kraft K aufbringen kann, und einem zweiten Zustand, in dem die Zelle 10 einen zweiten mechanischen Widerstand gegen die in Tiefenrichtung T wirkende Kraft K aufbringen kann, schaltbar zu sein, wobei der zweite mechanische Widerstand kleiner ist als der erste mechanische Widerstand.

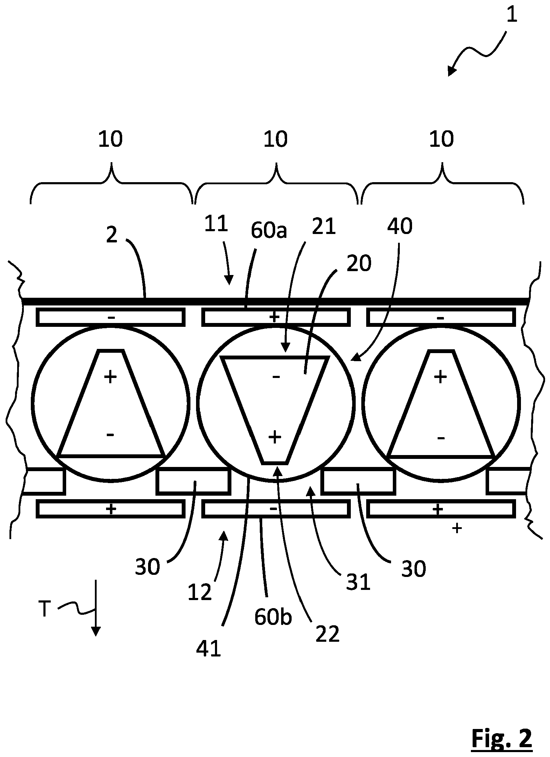

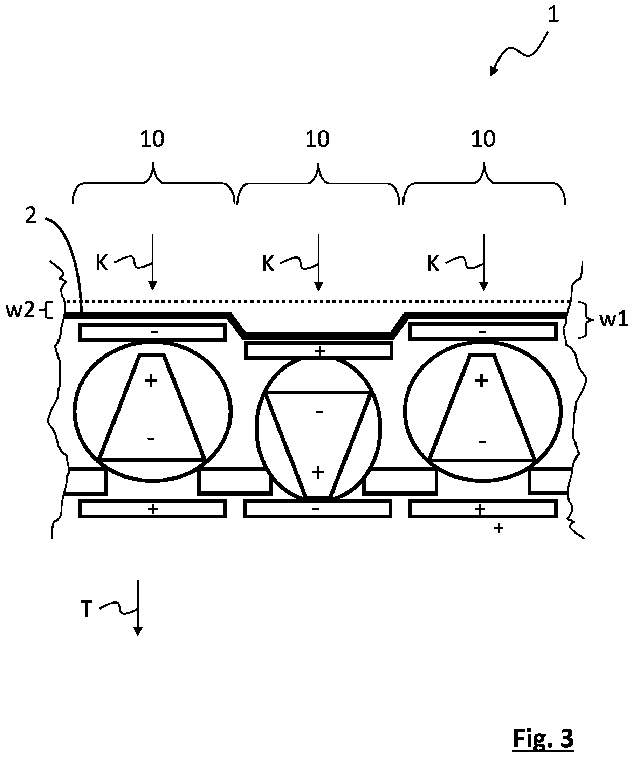

In Fig. 1 befinden sich sämtliche dargestellten Zellen 10 in dem ersten Zustand, während in den Figuren 2 und 3 sich die mittlere Zelle 10 in dem zweiten Zustand und die beiden äußeren Zellen 10 sich weiterhin im ersten Zustand befinden.

Wie in Fig. 3 zu erkennen ist, ist jede Zelle 10 dazu ausgebildet, bei in Tiefenrichtung T auf die Zelle 10 aufgebrachter Kraft K in dem ersten Zustand der Zelle 10 eine erste Wegstrecke w1 in Tiefenrichtung T bewegbar zu sein, und in dem zweiten Zustand der Zelle 10 eine zweite Wegstrecke w2 in Tiefenrichtung T bewegbar zu sein, wobei die zweite Wegstrecke w2 kleiner ist als die erste Wegstrecke w1. Im vorliegenden Beispiel ist der Betrag der einzelnen auf die Zellen 10 wirkenden Kräfte K gleich. Eine solche Kraft K kann beispielsweise eine von einem Benutzer etwa mit einem Finger auf das Berührungsfeld 1 aufgebrachte Berührungskraft sein. Ferner kann eine solche Kraft K auch dadurch aufgebracht werden, indem die Rückseiten 12 der Zellen mit einem Unterdruck beaufschlagt werden. In diesem Fall muss das Berührungsfeld 1 mit Mitteln zur Erzeugung eines Unterdrucks, wie z.B. einer Pumpe, ausgestattet oder verbindbar sein. Ersichtlich muss sich das Berührungsfeld 1 dabei in einem im Wesentlichen abgeschlossenen Volumen befinden, z.B. indem es von einer Membran und/oder einem Gehäuse umgeben ist.

Jede Zelle 10 weist einen festen bzw. starren Körper 20 und einen rückseitig davon angeordneten Körpersitz 30 zum Abstützen des Körpers 20 auf, wobei der Körper 20 eine erste Seite 21 und eine davon abgewandte und gegenüberliegende zweite Seite 22 aufweist. Der Körper ist derart bewegbar gelagert, dass der Körper 20 in dem ersten Zustand der Zelle 10 mit seiner ersten Seite 21 dem Körpersitz 30 zugewandt ist und in dem zweiten Zustand der Zelle 10 mit seiner zweiten Seite 22 dem Körpersitz 30 zugewandt ist. Wie besonders gut in Fig. 3 erkennbar ist, sind Körper 20 und Körpersitz 30 derart ausgebildet, dass bei in Tiefenrichtung T auf die Zelle 10 aufgebrachter Kraft K der Körper 20 in dem ersten Zustand der Zelle 10 eine erste Wegstrecke w1 auf den Körpersitz 30 zu bewegt werden kann und in dem zweiten Zustand der Zelle 10 eine zweite Wegstrecke w2 auf den Körpersitz 30 zu bewegt werden kann, wobei die zweite Wegstrecke w2 kleiner ist als die erste Wegstrecke w1.

Der Körper 20 weist eine von seiner ersten Seite 21 zu seiner zweiten Seite 22 zulaufende Querschnittsfläche auf. Der Körpersitz 30 bildet eine zentrale Öffnung 31 aus, in die der Körper 20 in dem zweiten Zustand der Zelle 10 zumindest teilweise mit seiner zweiten Seite voran in den Körpersitz 30 eingeführt werden kann.

Jede Zelle 10 weist eine in ihrer Ruhelage kugelförmige, fluidgefüllte Kapsel 40 mit flexibler Membran 41 auf, in der der Körper 20 eingeschlossen ist. Der Körper 20 kann daher in der Kapsel 40 im Grunde frei rotiert werden. Im vorliegenden Fall weist der Körper 20 einen elektrischen Dipol auf, wobei jede Zelle 10 zwei Elektroden 60a, 60b zur Erzeugung eines elektrischen Feldes aufweist. Durch Anlegen einer entsprechenden Spannung entsteht ein elektrisches Feld zwischen den Elektroden 60a, 60b, wobei sich der elektrische Dipol des Körpers nach dem elektrischen Feld ausrichtet. Auf diese Weise kann in Abhängigkeit der angelegten Polarität zwischen den Zuständen der Zelle 10 geschaltet werden.

Die Zellen 10 sind auf ihrer Berührungsseite 11 durch eine flexible Schutzmembran 2 abgedeckt. Ferner können die Zellen 10 in einer elastischen Matrix eingeschlossen sein.

Das vorliegend beschriebene taktile Berührungsfeld 1 lässt sich besonders flach herstellen, wobei das Berührungsfeld 1 auf Makroebene eine gewisse Flexibilität beibehalten kann. Es eignet sich daher hervorragend für die Integration in ein flächiges oder streifenförmiges Auskleidungsmaterial, insbesondere zur Verwendung für Innen- oder Außenverkleidungen, in Flugzeugen, Kraftfahrzeugen oder Wasserfahrzeugen.

Ergänzend sei darauf hingewiesen, dass "aufweisend" keine anderen Elemente oder Schritte ausschließt und "ein" oder "eine" keine Vielzahl ausschließt.

Der Schutzbereich der vorliegenden Erfindung ist durch die Patentansprüche gegeben und wird durch die in der Beschreibung erläuterten oder den Figuren gezeigten Merkmale nicht beschränkt.

## Patentansprüche

1. Taktiles Berührungsfeld (1) mit einer Vielzahl von in einem Raster angeordneten taktilen Zellen (10),
wobei jede Zelle eine Berührungsseite (11) sowie eine von der Berührungsseite (11) abgewandte Rückseite (12) aufweist und eine von der Berührungsseite (11) zur Rückseite (12) gerichtete Tiefenrichtung (T) definiert,
wobei jede Zelle (10) dazu ausgebildet ist, zwischen einem ersten Zustand, in dem die Zelle (10) einen ersten mechanischen Widerstand gegen eine in Tiefenrichtung (T) wirkende Kraft (K) aufbringen kann, und einem zweiten Zustand, in dem die Zelle (10) einen zweiten mechanischen Widerstand gegen die in Tiefenrichtung (T) wirkende Kraft (K) aufbringen kann, schaltbar zu sein, wobei der zweite mechanische Widerstand kleiner ist als der erste mechanische Widerstand.

2. Taktiles Berührungsfeld (1) nach Anspruch 1, wobei jede Zelle (10) dazu ausgebildet ist, bei in Tiefenrichtung (T) auf die Zelle (10) aufgebrachter Kraft (K) in dem ersten Zustand der Zelle (10) eine erste Wegstrecke (w1) in Tiefenrichtung (T) bewegbar zu sein, und in dem zweiten Zustand der Zelle (10) eine zweite Wegstrecke (w2) in Tiefenrichtung (T) bewegbar zu sein, wobei die zweite Wegstrecke (w2) kleiner ist als die erste Wegstrecke (w1).

3. Taktiles Berührungsfeld (1) nach Anspruch 1 oder 2, wobei jede Zelle (10) einen festen Körper (20) und einen rückseitig davon angeordneten Körpersitz (30) zum Abstützen des Körpers (20) aufweist, wobei der Körper (20) eine erste Seite (21) und eine davon abgewandte, insbesondere gegenüberliegende, zweite Seite (22) aufweist und derart bewegbar gelagert ist, dass der Körper (20) in dem ersten Zustand der Zelle (10) mit seiner ersten Seite (21) dem Körpersitz (30) zugewandt ist und in dem zweiten Zustand der Zelle (10) mit seiner zweiten Seite (22) dem Körpersitz (30) zugewandt ist.

4. Taktiles Berührungsfeld (1) nach Anspruch 3, wobei der Körper (20) und der Körpersitz (30) derart ausgebildet sind, dass bei in Tiefenrichtung (T) auf die Zelle (10) aufgebrachter Kraft (K) der Körper (20) in dem ersten Zustand der Zelle (10) eine erste Wegstrecke (w1) auf den Körpersitz (30) zu bewegt werden kann und in dem zweiten Zustand der Zelle (10) eine zweite Wegstrecke (w2) auf den Körpersitz (30) zu bewegt werden kann, wobei die zweite Wegstrecke (w2) kleiner ist als die erste Wegstrecke (w1).

5. Taktiles Berührungsfeld (1) nach Anspruch 4, wobei der Körper (20) und der Körpersitz (30) derart ausgebildet sind, dass der Körper (20) in dem ersten und/oder in dem zweiten Zustand der Zelle (10) zumindest teilweise in den Körpersitz (30) eingeführt werden kann, insbesondere wobei der Körpersitz (30) eine zentrale Öffnung (31) ausbildet und der Körper (20) eine von seiner ersten Seite (21) zu seiner zweiten Seite (22) zulaufende Querschnittsfläche aufweist.

6. Taktiles Berührungsfeld (1) nach einem der Ansprüche 3 bis 5, wobei jede Zelle (10) eine insbesondere kugelförmige, fluidgefüllte Kapsel (40) mit flexibler Membran (41) aufweist, in der der Körper (20) eingeschlossen ist.

7. Taktiles Berührungsfeld (1) nach einem der Ansprüche 3 bis 6, wobei der Körper (20) einen elektrischen und/oder magnetischen Dipol aufweist.

8. Taktiles Berührungsfeld (1) nach Anspruch 7 mit Mitteln (60a, 60b) zur Erzeugung eines elektrischen und/oder magnetischen Feldes (E) zum Schalten zwischen den Zuständen der Zelle (10) durch Ausrichtung des Dipols des Körpers (20).

9. Taktiles Berührungsfeld (1) nach einem der vorangehenden Ansprüche mit einer die Zellen (10) auf ihrer Berührungsseite (11) abdeckenden flexiblen Schutzmembran (2).

10. Taktiles Berührungsfeld (1) nach einem der vorangehenden Ansprüche mit Mitteln zur Erzeugung einer in Tiefenrichtung (T) gerichteten Zugkraft auf die Zellen (10).

11. Taktiles Berührungsfeld (1) nach Anspruch 10, wobei die Mittel zur Erzeugung einer Zugkraft auf die Zellen Mittel zur Erzeugung eines Unterdrucks aufseiten der Rückseiten (12) der Zellen (10) enthalten.

12. Taktiles Berührungsfeld (1) nach einem der vorangehenden Ansprüche, wobei die Zellen (10) in einer elastischen Matrix eingeschlossen sind.

13. Flächiges oder streifenförmiges Auskleidungsmaterial mit einem taktilen Berührungsfeld (1) nach einem der vorangehenden Ansprüche.

14. Verwendung eines Auskleidungsmaterials nach Anspruch 13, in Flugzeugen, Kraftfahrzeugen oder Wasserfahrzeugen, für Innenverkleidungen oder -verkleidungsteile, insbesondere Schalttafeln oder Armaturenbretter, Seitenverkleidungen, Türverkleidungen, Ablagen, und/oder Außenverkleidungen.
